(19) Europäisches Patentamt
European Patent Office
Office européen des brevets

(11) **EP 3 524 346 A1**

(12) **EUROPEAN PATENT APPLICATION**
published in accordance with Art. 153(4) EPC

(43) Date of publication:
**14.08.2019 Bulletin 2019/33**

(21) Application number: **17858495.9**

(22) Date of filing: **05.10.2017**

(51) Int Cl.:
**B01J 23/22** [(2006.01)]   **B01D 53/86** [(2006.01)]
**B01J 23/30** [(2006.01)]   **B01J 35/04** [(2006.01)]
**B01J 35/06** [(2006.01)]   **B01J 37/02** [(2006.01)]

(86) International application number:
**PCT/JP2017/036336**

(87) International publication number:
**WO 2018/066659 (12.04.2018 Gazette 2018/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.10.2016 JP 2016197331**

(71) Applicant: **Hitachi Zosen Corporation**
**Osaka-shi, Osaka 559-8559 (JP)**

(72) Inventors:
• **NISHI, Tsugumi**
  **Osaka-shi**
  **Osaka 559-8559 (JP)**

• **SHONO, Emi**
  **Osaka-shi**
  **Osaka 559-8559 (JP)**
• **HIKAZUDANI, Susumu**
  **Osaka-shi**
  **Osaka 559-8559 (JP)**
• **HINO, Naoe**
  **Osaka-shi**
  **Osaka 559-8559 (JP)**

(74) Representative: **Grünecker Patent- und Rechtsanwälte**
**PartG mbB**
**Leopoldstraße 4**
**80802 München (DE)**

(54) **CATALYST SUPPORT STRUCTURE AND METHOD FOR MANUFACTURING SAME**

(57)    Provided are a mercury oxidation catalyst support structure with which a mercury oxidation reaction can be carried out while inhibiting the oxidation reaction for $SO_2$ included in exhaust gas and a method for manufacturing the same. This mercury oxidation catalyst structure is characterized by vanadium being unevenly supported on the surface of the support structure. The method for manufacturing the mercury oxidation catalyst structure includes a step of incorporating an inactive support throughout from the inside to the surface of the structure using an inactive support-containing liquid and a step of immersing the structure having been subjected to the step in a liquid containing vanadium or applying the same liquid to the surface of the same structure, followed by drying and calcinating, thereby supporting vanadium on the inactive support present in the surface of the structure.

FIG. 2

FLAT PLATE
CORRUGATED PLATE
FLAT PLATE
● : ACTIVE SPOT

EP 3 524 346 A1

## Description

Technical Field

The present invention relates to a mercury oxidation catalyst support structure for oxidizing zerovalent mercury ($Hg^0$) present in a state of an element contained in exhaust gas to divalent mercury ($Hg^{2+}$) constituting various types of mercury compounds such as soluble mercury salts, and a method for manufacturing the same.

Background Art

A fossil fuel such as coal or general waste or the like sometimes contain a small amount of a toxic metal, particularly mercury other than a hydrocarbon to serve as a fuel source, and a small amount of mercury is contained in exhaust gas from a coal-fired thermal power plant, a waste incineration facility, or the like that burns such a fossil fuel or general waste or the like as a fuel. It is known that there exist three forms of mercury (Hg) contained in such exhaust gas: zerovalent mercury ($Hg^0$) in an elemental state; divalent mercury ($Hg^{2+}$) constituting various types of mercury compounds such as soluble mercury salts; and particulate mercury (HgP).

Among these forms of mercury, zerovalent mercury ($Hg^0$) in an elemental state cannot be collected by any method if it remains in this form and therefore is released to the atmosphere as it is. On the other hand, divalent mercury ($Hg^{2+}$) reacts with a halogen (for example, HCl) present in the first place in exhaust gas or fed as appropriate to form a water-soluble halide ($HgCl_2$ or the like), and therefore can be collected in an exhaust gas treatment facility (for example, a bag filter or a wet scrubber). Further, particulate mercury (HgP) is in a particulate form, and therefore is adhered to flying ash and can be collected in an exhaust gas treatment facility (for example, an electrostatic precipitator). Therefore, what becomes a problem in the treatment is zerovalent mercury ($Hg^0$) in an elemental state.

Incidentally, there is a trend toward promotion of regulation on emission of mercury throughout the world, and in light of the effect and the like of mercury on health and environment, it is necessary to change zerovalent mercury ($Hg^0$) to a collectable form, and from such a viewpoint, a method for oxidizing zerovalent mercury ($Hg^0$) in an elemental state to divalent mercury ($Hg^{2+}$) has already been known and carried out. For example, Patent Literature 1(PTL 1) describes that a Ti-V-based catalyst can be used in a mercury oxidation reaction of oxidizing zerovalent mercury ($Hg^0$) in an elemental state to divalent mercury ($Hg^{2+}$) and also describes a method for treating an exhaust gas by bringing this mercury oxidation catalyst into contact with exhaust gas.

However, when using the above-mentioned mercury oxidation catalyst, due to vanadium (V) in the catalyst, a side reaction in which sulfur dioxide ($SO_2$) contained in exhaust gas is oxidized to sulfur trioxide ($SO_3$) occurs.

PTL 1: JP-A-2005-125211

Disclosure of Invention

Technical Problem

The present invention has been made for solving the above problem and has its object to provide a catalyst support structure capable of carrying out a denitration catalytic reaction and a mercury oxidation reaction while suppressing the oxidation reaction of $SO_2$ contained in exhaust gas and a method for manufacturing the same.

Solution to Problem

The present inventors made intensive studies for solving the above problem.

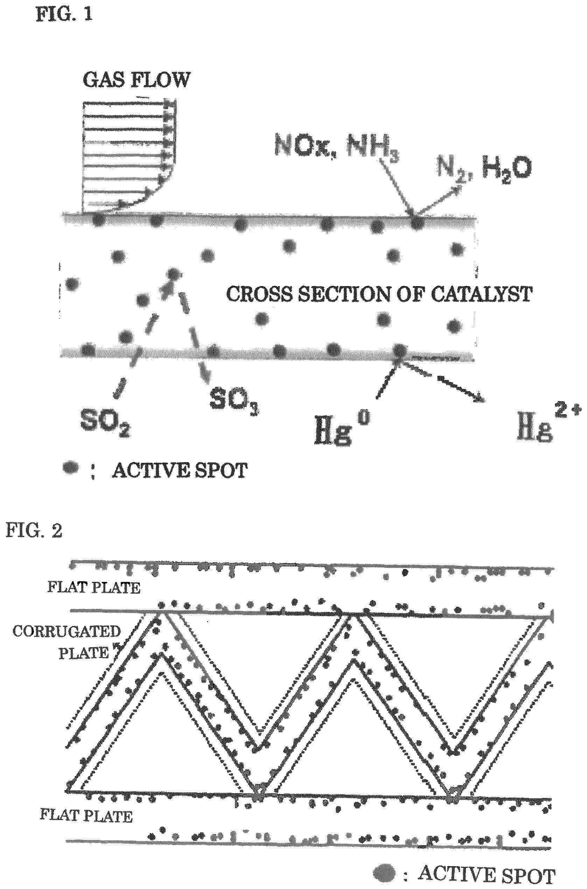

With reference to FIG. 1, a reaction site of each reaction when a mercury oxidation catalyst in a related art (for example, JP-A-2005-125211) comes in contact with the flow of exhaust gas will be described.

The present inventors found that a mercury oxidation reaction and a $SO_2$ oxidation reaction are different in reaction rate, and reaction sites in a catalyst support structure are different between these reactions as shown in FIG. 1,

That is, the mercury oxidation reaction has a high reaction rate, and therefore, vanadium present in the surface of the catalyst support structure becomes an active spot of the mercury oxidation reaction. Similarly, also a denitration reaction of a nitrogen oxide (NOx) contained in exhaust gas has a high reaction rate, and therefore, also in this case, vanadium present in the surface of the catalyst support structure becomes an active spot of the denitration reaction. These reactions are sufficient only with vanadium present in the surface of the catalyst support structure, and therefore, vanadium present deep inside the catalyst support structure is not involved in these reactions.

On the other hand, the $SO_2$ oxidation reaction is slower than the above-mentioned two reactions, and therefore, not vanadium present in the surface of the catalyst support structure, but vanadium present deep inside the catalyst support structure that does not become an active spot of the mercury oxidation reaction and the denitration reaction becomes an active spot of the catalytic reaction.

In consideration of the above circumstances, the present inventors found that when vanadium (V) that is an active spot is unevenly supported only in the surface of the catalyst support structure, the $SO_2$ oxidation ability can be suppressed while maintaining the mercury oxidation ability and the denitration ability in combustion exhaust gas, and thus completed the present invention.

That is, the catalyst support structure of the present invention is characterized in that vanadium is unevenly supported in a surface of a support structure.

Preferably, the support structure includes an inactive support in a structure, and the inactive support is included throughout the entire region from the inside to the surface of the support structure, and vanadium is supported on the inactive support present in the surface of the support structure.

Preferably, the supported vanadium amount is 2.0 wt% or more with respect to the total weight of the surface of the catalyst support structure.

Preferably, the structure is constituted by a base material selected from a glass paper and a ceramic fiber sheet.

Preferably, the structure has a honeycomb structure formed by alternately stacking the flat plate-shaped base materials selected from a glass paper and a ceramic fiber sheet and the corrugated plate-shaped based materials formed by molding the flat plate-shaped base material into a corrugated plate shape.

Preferably, the inactive support is at least one selected from titania, alumina, zirconia, and silica.

Further, the present invention relates to a method for manufacturing a catalyst support structure in which vanadium is unevenly supported in a surface of a support structure including an inactive support, and this method includes a step of incorporating the inactive support throughout from the inside to the surface of the structure using an inactive support-containing liquid, and a step of immersing the structure having been subjected to the step in a liquid containing vanadium or applying the same liquid to the surface of the same structure, followed by drying and calcinating, thereby supporting vanadium on the inactive support present in the surface of the structure.

Preferably, the structure is composed of a base material selected from a glass paper and a ceramic fiber sheet, and the vanadium supporting step is a step of supporting vanadium in both front face and rear face of the base material.

Preferably, the structure includes a glass paper as the base material, and in the step of incorporating the inactive support in the structure, the inactive support-containing liquid further contains an inorganic binder selected from titania, alumina, zirconia, and silica.

Preferably, after the vanadium supporting step, the method includes a step of molding a flat plate-shaped base material into a corrugated plate shape, and a step of alternately stacking the flat plate-shaped base materials and the corrugated plate-shaped based materials, thereby forming a honeycomb structure.

Preferably, the catalyst support structure is a catalyst support structure with a multilayer structure characterized in that in the catalyst support structure, tungsten (W) is further contained, and in a multilayer structure catalyst in which a V-containing layer is formed on a surface of a support formed with a material that is inactive in catalytic performance, the amounts of W in the V-containing layer in a catalyst surface and in an inactive layer inside the catalyst are different, and $W/TiO_2$ in the catalyst surface is 0.11 or more and $W/TiO_2$ in the whole catalyst is 0.09 or more.

Preferably, the catalyst support structure is a catalyst support structure with a multilayer structure characterized in that in the catalyst support structure, tungsten (W) is further contained, and in a multilayer structure catalyst in which a V-containing layer is formed on a surface of a support formed with a material that is inactive in catalytic performance, the amounts of W in the V-containing layer in a catalyst surface and in an inactive layer inside the catalyst are equal, and $W/TiO_2$ in the catalyst surface and in the whole catalyst is 0.13 or more.

Advantageous Effects of Invention

According to the present invention, vanadium is unevenly supported in the surface of the support structure, and therefore, an objective mercury oxidation reaction can be allowed to occur while suppressing a $SO_2$ oxidation reaction whose reaction rate is slow.

Brief Description of Drawings

FIG. 1 is a view illustrating a reaction site of each reaction in a mercury oxidation catalyst in a related art.
FIG. 2 is a view showing an active spot in a mercury oxidation catalyst support structure of the present invention.
FIG. 3 is a flow sheet showing an outline of a testing device to be used in a catalytic performance test for a catalyst of Example.
FIG. 4 is a view showing a cross-sectional view of a mercury oxidation catalyst support structure of Example 6.
FIG. 5 is a flow sheet of a testing device to be used in a denitration catalytic performance test for a catalyst of Reference Example.

Description of Embodiments

Hereinafter, a mercury oxidation catalyst support structure, which is one example of the catalyst support structure according to the present invention will be described in detail.

The mercury oxidation catalyst support structure according to the present invention is configured such that vanadium having a mercury oxidation ability is unevenly supported in a surface of a support structure (a state in which vanadium is included only in a surface of a structure).

In FIG. 2, a distribution condition of vanadium that becomes an active spot in the mercury oxidation catalyst support structure according to the present invention is shown by a honeycomb structure in which flat plate-shaped and corrugated plate-shaped sheet-like support structures are alternately stacked as an example.

As shown in FIG. 2, here, vanadium is unevenly supported in a surface of a support structure. By such uneven supporting, the amount of active spots necessary for a mercury oxidation reaction can be efficiently increased, and the performance of the mercury oxidation reaction can be improved. On the other hand, a $SO_2$ oxidation reaction has a slow reaction rate, and therefore, vanadium present in the surface of the support structure cannot be used as the active spot of the catalytic reaction, and further, vanadium that becomes the active spot is not present deep inside the support structure as in the related art, resulting in suppressing the $SO_2$ oxidation reaction.

The mercury oxidation catalyst support structure according to the present invention may have any form as long as vanadium is unevenly supported in the surface of the support structure, however, it is preferred that the support structure includes an inactive support in a structure (is in a state in which an inactive support is included throughout the entire region from the inside to the surface of the structure), and vanadium (V) is supported on the inactive support present in the surface of the support structure. According to this, vanadium can be unevenly supported in the surface of the support structure simply and easily.

In the mercury oxidation catalyst support structure according to the present invention, tungsten (W) that is a co-catalyst is preferably contained. Tungsten has an effect of assisting the action of the activity of vanadium as well as increasing the strength of the catalyst support structure.

The mercury oxidation catalyst support structure according to the present invention can also be utilized as a denitration catalyst support structure having denitration catalytic performance. In the mercury oxidation catalyst support structure according to the present invention, the weight ratio of vanadium is preferably 2.0 wt% or more with respect to the total weight of the surface (V layer) of the mercury oxidation catalyst support structure. According to this, about 70% denitration performance is exhibited. Here, the weight distribution of vanadium and tungsten in the surface of the mercury oxidation catalyst support structure is determined by measuring a portion at about several tens of micrometers from the surface of the mercury oxidation catalyst support structure in which an X-ray can penetrate using an X-ray fluorescence spectrometer (XRF). When confirming that vanadium and tungsten are unevenly supported in the mercury oxidation catalyst support structure according to the present invention, the confirmation can also be performed by measuring the surface of a test piece of a plate-shaped catalyst support structure using an X-ray fluorescence spectrometer (XRF), and subsequently pulverizing the test piece and measuring the catalyst support structure in a powder form, and then comparing the respective measured values.

When utilizing it as a denitration catalyst support structure, particularly, the denitration performance can be improved;

(1) when the amounts of tungsten in the vanadium-containing layer in the catalyst surface and in the inactive layer inside the catalyst are different, by setting the weight ratio of $W/TiO_2$ in the catalyst surface to 0.11 or more and setting the weight ratio of $W/TiO_2$ in the whole catalyst to 0.09 or more, and
(2) when the amounts of tungsten in the vanadium-containing layer in the catalyst surface and in the inactive layer inside the catalyst are equal, by setting the weight ratio of $W/TiO_2$ in the catalyst surface and in the whole catalyst to 0.13 or more.

The structure in the support structure may be any as long as the above-mentioned inactive support can be included therein, but is preferably constituted by a flat plate-shaped base material selected from a glass paper and a ceramic fiber sheet. Such a base material has an advantage of being easily molded into a shape according to the intended purpose. For example, if the base material is a flat plate-shaped base material as described above, it can be configured to have a honeycomb structure formed by alternately stacking the flat plate-shaped base materials and the corrugated plate-shaped based materials formed by molding the flat plate-shaped base material into a corrugated plate shape.

The glass paper or the ceramic fiber sheet as the flat plate-shaped base material may be a commercially available product. A commercially available glass paper is constituted by a non-woven fabric glass fiber and an organic binder. The thickness of the glass paper is preferably from 0.1 mm to 5.0 mm, preferably from 0.3 mm to 3.0 mm, more preferably from 0.5 mm to 1.2 mm. By setting the thickness of the glass paper thin, pressure loss when exhaust gas passes through the inside of the mercury oxidation catalyst support structure manufactured from the glass paper can be suppressed low.

The thickness at which vanadium is unevenly supported is preferably from about 0.01 mm to 0.2 mm. Incidentally, the thickness at which vanadium is unevenly supported can be observed using an optical microscope or a scanning electron microscope (SEM).

When a commercially available glass paper is used as the flat plate-shaped base material, it becomes difficult to perform forming a glass paper as it is due to an organic binder contained in the commercially available glass paper, and therefore, an inorganic binder is also added thereto in the step of incorporating the inactive support. Examples of the inorganic binder include titania ($TiO_2$), alumina ($Al_2O_3$), zirconia, and silica ($SiO_2$).

The inactive support may be any as long as it is a material that is inactive or has an extremely low activity in the mercury oxidation reaction as described above, but may be, for example, one or more selected from titania ($TiO_2$), alumina ($Al_2O_3$), zeolite, kaolin, sepiolite, zirconia, and silica ($SiO_2$). Here, zeolite can be used as the inactive support, but did not have a function as the inorganic binder.

As described above, titania ($TiO_2$), alumina ($Al_2O_3$), zirconia, and silica ($SiO_2$) function as the inactive support and also simultaneously function as the inorganic binder when using a glass paper as the base material.

When vanadium is supported on the inactive support, vanadium is distributed in a pore portion (micro-pore) of the inactive support (for example, a titania ($TiO_2$) particle) present in a surface portion of the support structure.

On the other hand, in the mercury oxidation catalyst support structure of the present invention, vanadium is not supported in an internal portion (deep inside) other than the surface in the support structure. By incorporating the inactive support throughout from the deep inside to the surface of the structure, vanadium (V) that is an active spot is prevented from being supported on the inactive support deep inside the structure, and also the strength of not only the support structure, but also the mercury oxidation catalyst support structure itself can be increased.

Next, a method for manufacturing such a mercury oxidation catalyst support structure will be described.

This method includes a step of incorporating an inactive support throughout from the inside to the surface of the structure using an inactive support-containing liquid (for example, a Ti slurry), and a step of immersing the structure having been subjected to the step in a liquid containing the inactive support having vanadium supported thereon (V-containing slurry) or applying the same liquid to the surface of the same structure, followed by drying and calcinating, thereby supporting vanadium on the inactive support present in the surface of the structure. Incidentally, the both liquids preferably contain tungsten (W) that is a co-catalyst.

First, in order to perform the step of incorporating the inactive support in the structure, a solution or a suspension containing the inactive support is prepared. The resulting solution or suspension may be in the form of a slurry by mixing the inactive support and optionally an inorganic binder.

When obtaining the solution or the suspension to be used in this step, the weight ratio of various types of components may be appropriately selected.

In this step, any method may be used as long as the inactive support can be incorporated throughout from the deep inside to the surface of the structure, but specifically, this step is performed either by applying the inactive support-containing liquid to the structure or immersing the structure in the inactive support-containing liquid.

After incorporating the inactive support in the structure, it is preferred to perform a drying step. Here, in this step, it is preferred not to perform calcination after the drying step. If calcination is performed at this stage, vanadium easily penetrates deep inside the support structure in the subsequent step.

The vanadium supporting step to be performed following the step of incorporating the inactive support is performed by immersing the structure having been subjected to the above-mentioned step in a liquid (a solution or a suspension) containing the inactive support having vanadium supported thereon, or applying the same liquid to the surface of the support structure. Incidentally, when using the immersing method, vanadium may penetrate deep inside the support structure depending on the immersion time, and therefore, the applying method free of such fear is more preferred.

By undergoing the above-mentioned respective steps, the mercury oxidation catalyst support structure is prepared.

Incidentally, the mercury oxidation catalyst support structure according to the present invention may have any shape as long as it can come in contact with zerovalent mercury in combustion exhaust gas and oxidize it to divalent mercury, and examples thereof include a particulate shape, a pellet shape, a honeycomb shape, a corrugated piece, and a plate shape, however, the shape can be arbitrarily selected according to a reactor to be applied and gas flow conditions.

(Examples)

Hereinafter, the mercury oxidation catalyst support structure according to the present invention will be specifically described using Examples and also Comparative Examples for comparison with Examples will be shown together, however, the present invention is not limited to the Examples.

(Example 1)

A mercury oxidation catalyst support structure was prepared according to the following.

(Preparation of Ti Slurry)

A silica sol (Silicadol 20A, manufactured by Nissan Chemical Corporation), ion exchanged water, and a $TiO_2$ powder were mixed at a weight ratio of 100:40:80, whereby a slurry was obtained. To this slurry, a 28% $NH_3$ aqueous solution was added to adjust the pH to 6.5 or higher. Thereafter, 8.64 g parts by weight of a 50% AMT aqueous solution (an ammonium metatungstate aqueous solution) was added thereto, whereby a Ti slurry was obtained.

(Preparation of V-Containing Slurry)

A silica sol (Silicadol 20A, manufactured by Nissan Chemical Corporation), ion exchanged water, and a $TiO_2$ powder were mixed at a weight ratio of 150:30:80, whereby a slurry was obtained. To this slurry, a 28% $NH_3$ aqueous solution was added to adjust the pH to 4.5 to 4.7. Thereafter, an AMV (ammonium metavanadate) powder and ion exchanged water were mixed at a weight ratio of 5:70, and added to the slurry whose pH was adjusted. Thereafter, 9 g parts by weight of a 50% AMT aqueous solution was added thereto, whereby a V-containing slurry was obtained.

(Preparation of Catalyst)

To a glass fiber paper (SPP-110, manufactured by Oribest Co., Ltd.), the Ti slurry was applied by uniformly spreading so that the supported amount was 300 g/m$^2$ (the step of incorporating the inactive support throughout from the inside to the surface thereof). Thereafter, the glass fiber paper having the Ti slurry supported thereon was immersed in the V-containing slurry (the step of immersing the structure having been subjected to the above-mentioned step in a liquid containing the inactive support having vanadium supported thereon). The glass fiber paper having the V-containing slurry supported thereon was dried at 100°C, and then calcined at 500°C for 3 hours, whereby a mercury oxidation catalyst support structure (hereinafter, a similar material is also referred to as "catalyst") was obtained.

(Example 2)

A catalyst was obtained in the same manner as in Example 1 except that the supported amount of the Ti slurry in Example 1 was changed to 200 g/m$^2$, and the V-containing slurry was applied after drying the glass fiber paper having the Ti slurry supported thereon at 100°C.

(Example 3)

A catalyst was obtained in the same manner as in Example 1 except that the supported amount of the Ti slurry in Example 1 was changed to 200 g/m$^2$.

(Example 4)

A catalyst was obtained in the same manner as in Example 1 except that the weight ratio of AMV and AMT in Example 1 was changed to 3.5:8.5.

(Comparative Example 1)

A mercury oxidation catalyst support structure was prepared according to the following.

(Preparation of Catalyst Slurry)

A silica sol (Silicadol 20A, manufactured by Nissan Chemical Corporation), ion exchanged water, and a $TiO_2$ powder were mixed at a weight ratio of 100:20:80, whereby a slurry (A) was obtained. To this slurry, a 28% $NH_3$ aqueous solution was added to adjust the pH to 4.5 to 4.7. Thereafter, the slurry (A) was added to a slurry (B) obtained by mixing AMV and ion exchanged water at a weight ratio of 4.8:20 and adjusting the pH. Thereafter, 9 g parts by weight of a 50% AMT (ammonium metatungstate) aqueous solution was added thereto, whereby a catalyst slurry was obtained.

(Preparation of Catalyst)

To a glass fiber paper (SPP-110, manufactured by Oribest Co., Ltd.), the catalyst slurry was applied by uniformly spreading so that the supported amount was 300 $g/m^2$. The glass fiber paper having the catalyst slurry supported thereon was dried at 100°C, and then calcined at 500°C for 3 hours, whereby a catalyst was obtained.

(Catalytic Performance Test 1)

A catalytic performance test was performed for the respective catalysts (Examples 1 to 4 and Comparative Example 1) obtained above.
In the test, two pieces obtained by cutting out each of the above-mentioned catalysts to a test piece size of 30×50 mm were used. The cut out catalyst was clipped in a mesh catalyst holder and placed in a reaction tube made of alumina.

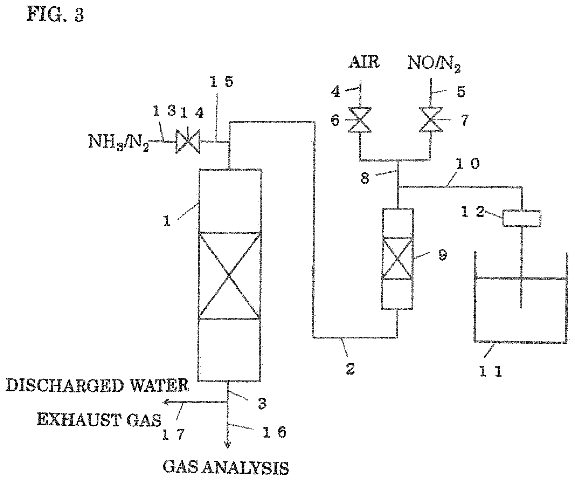

FIG. 3 shows a flow sheet of a testing device to be used in the catalytic performance test.
In a reaction tube (1), any of the above-mentioned catalysts is loaded, and a model gas for a denitration test is introduced from one side of this reaction tube (1) through a line (2), and the gas having been subjected to a treatment with the catalyst is discharged from the other side through a line (3).
A gas for the test to be introduced into the reaction tube (1) through the line (2) is prepared by mixing air from a line (4) and $NO/N_2$ gas from a line (5) . Valves (6) and (7) are provided in the lines (4) and (5), respectively, and by adjusting the valves (6) and (7), the flow rate of each gas is adjusted so as to adjust the gas flow rate and the mixing ratio.
The gas after mixing is introduced into an upper portion of an evaporator (9) through a line (8) and is supplied to the reaction tube (1) through the line (2) from a lower portion thereof. Upstream of this evaporator (9), water is supplied through a line (10). Water is pumped up with a metering feed pump (12) from a water tank (11) and then introduced upstream of the evaporator (9) through the line (10). From the upstream of the reaction tube (1), $NH_3$ that is a reducing agent is supplied through a line (15). $NH_3$ is introduced upstream of the reaction tube (1) through the line (15) by adjusting the gas flow rate of $NH_3/N_2$ gas from a valve (14) provided in a line (13). Water introduced into the line (8) through the line (10) is evaporated in the line (2) by heating with a heater (not shown) in the evaporator (9).
The gas having been subjected to the treatment discharged from the reaction tube (1) is discharged outside through a line (17) from the line (3) and also a portion is subjected to a gas analysis through a line (16).
When performing the test using the catalytic performance testing device shown in FIG. 3, the test conditions are summarized in the following Table 1.

Table 1. Measurement of Denitration Rate and Test Conditions

| | |
|---|---|
| Gas composition: NO | 100 ppmvd |
| Gas composition: Air | Balance |
| Gas composition: $NH_3$ | 100 ppmvd |
| Water | 10 vol% |
| Gas flow rate | 5 L/min |
| Catalyst amount | Two test pieces |
| Areal velocity | 50 Nm/h |
| Reaction temperature | 350°C |

The "Balance" in Table 1 represents a material that is added so as to make the gas composition 100% in total and indicates that the gas composition other than NO, $NH_3$, and water is occupied by air (denoted by "Air" in the table) . Further, the "Areal velocity" was calculated according to the following numerical formula (1).

```
Numerical formula (1):

        Areal  velocity  [Nm/h]  =  Gas  flow  rate  /  Catalyst geometric area
```

The gas analysis was performed by measuring the outlet NOx concentration using a NOx meter. From the measured values by the NOx meter, the denitration rate representing the NOx removal performance of the catalyst was calculated according to the following numerical formula (2).

```
Numerical formula (2):

    Denitration rate [-] = (NOx(in) - NOx(out)) / NOx(in)
```

The V (surface) ratio was calculated using an X-ray fluorescence spectrometer (XRF). On the other hand, the total catalyst supported amount $[g/m^2]$ was analyzed according to the following numerical formula (3) after pulverizing the plate-shaped catalyst.

```
Numerical formula (3):

    Total catalyst supported amount [g/m²]

 = (Weight of catalyst supporting base material [g] - Weight

 of glass paper [g]) / Area of catalyst supporting base

 material [m²] × 2)
```

From the above results, the V supported amount $[g/m^2]$ was calculated according to the following numerical formula (4) using the total catalyst supported amount $[g/m^2]$ and the V (surface) ratio.

```
Numerical formula (4):

    V supported amount [g/m²]

 = Total catalyst supported amount (Ti+V) [g/m²] × V (surface)

 ratio [wt%]
```

The results of the denitration performance test for the above-mentioned respective catalysts are shown in the following Table 2.

Table 2. Test Results

| | V (surface) [wt%] | V supported amount [g/m²] | Denitration rate [-] | K value [Nm/h] |
|---|---|---|---|---|
| Comparative Example 1 | 3.70 | 11.34 | 0.734 | 66.3 |
| Example 1 | 2.25 | 5.74 | 0.740 | 67.3 |
| Example 2 | 2.35 | 4.96 | 0.741 | 67.5 |
| Example 3 | 1.72 | 4.89 | 0.698 | 59.9 |
| Example 4 | 1.98 | 3.83 | 0.721 | 63.8 |

In Comparative Example 1, a conventionally known catalyst in which V is supported in the whole catalyst was used. In Examples 1 to 4, a catalyst in which V is unevenly supported only in the catalyst surface was used.
From Examples 1 to 4, it was found that the ratio of V in the catalyst surface is required to be 2.0 wt% or more for maintaining a denitration rate equivalent to that in Comparative Example 1.
Based on the above results, by unevenly supporting V only in the catalyst surface and also by setting the ratio of V in the catalyst surface to 2.0 wt% or more, even when the V supported amount was reduced to about 1/2 of that in Comparative Example 1, the denitration rate could be maintained.

(Verification of Mercury Oxidation Ability and SO$_2$ Oxidation Ability)

(Comparative Example 2)

A catalyst was obtained in the same manner as in Comparative Example 1 except that in place of the silica sol in Comparative Example 1, a zirconia sol (ZA-20, manufactured by Daiichi Kigenso Kagaku Kogyo Co., Ltd.) was used, and further, a slurry containing the zirconia sol, ion exchanged water, and a TiO$_2$ powder at a weight ratio of 150:20:80 was formed.

(Example 5)

(Preparation of Ti Slurry)

A zirconia sol, ion exchanged water, and a TiO$_2$ powder were mixed at a weight ratio of 100:40:80, whereby a slurry was obtained. Thereafter, to this slurry, 8.64 g parts by weight of a 50% AMT aqueous solution was added, whereby a Ti slurry was obtained.

(Preparation of V-Containing Slurry)

A zirconia sol, ion exchanged water, a TiO$_2$ powder, and AMV were mixed at a weight ratio of 220:70:80:6, whereby a slurry was obtained. Thereafter, to this slurry, 9 g parts by weight of a 50% AMT aqueous solution was added, whereby a V-containing slurry was obtained.

(Preparation of Catalyst)

To a glass fiber paper, the Ti slurry was applied by uniformly spreading so that the supported amount was 200 g/m$^2$ and dried at 100°C. Thereafter, the V-containing slurry was applied to the glass fiber paper having the Ti slurry supported thereon and dried at 100°C, and then calcined at 700°C for 10 minutes, whereby a catalyst was obtained.

(Catalytic Performance Test 2)

A catalytic performance test was performed for the catalysts (Comparative Example 2 and Example 5) obtained above with respect to each of the mercury oxidation ability and the SO$_2$ oxidation ability under the conditions shown in Table 3. In the following Table 3, the left column shows the conditions when performing the test with respect to the SO$_2$ oxidation ability, and the right column shows the conditions when performing the test with respect to the mercury oxidation ability.

Table 3. Test Conditions

| Test items | SO$_2$ oxidation ability | Mercury oxidation ability |
|---|---|---|
| Gas composition: O2 | 3% | 3% |
| Gas composition: SO$_2$ | 3000 ppmvd | - |
| Gas composition: HCl | - | 50 ppmvd |
| Gas composition: Hg | - | 50 μg/Nm$^3$ |
| Gas composition: N$_2$ | Balance | Balance |
| H$_2$O | 8% | 8% |
| Gas flow rate | 150 Nm$^3$/h | 9.6 Nm$^3$/h |
| Areal velocity | 40.9 Nm/h | 60.4 Nm/h |
| Reaction temperature | 380°C | 380°C |

The results obtained by the catalytic performance test performed under the conditions shown in Table 3 are shown in the following Table 4.

Table 4. Test Results

|  | V supported amount [g/m$^2$] | SO$_2$ oxidation rate [%] | Mercury oxidation rate [%] |
|---|---|---|---|
| Comparative Example 2 | 12.3 | 0.41 | 24 |
| Example 5 | 6.2 | 0.06 | 56 |

Comparative Example 2 is a catalyst in which V is supported in the whole catalyst, and Example 5 is a catalyst in which V is unevenly supported only in the catalyst surface.

As in Example 5, by unevenly supporting V only in the catalyst surface (by reducing the V supported amount from that in Comparative Example 2 to that in Example 5), the SO$_2$ oxidation rate could be suppressed. Further, by unevenly supporting V in the catalyst surface, the mercury oxidation rate could be improved.

As shown above, by unevenly supporting V in the catalyst surface, the mercury oxidation rate could be improved and also the SO$_2$ oxidation rate could be suppressed.

(Verification of Effect of Suppressing SO$_2$ Oxidation Ability)

(Comparative Example 3)

(Preparation of Catalyst Slurry)

A silica sol (Silicadol 20A, manufactured by Nissan Chemical Corporation), ion exchanged water, a TiO$_2$ powder, AMV (ammonium metavanadate), and a 50% AMT (ammonium metatungstate) aqueous solution were mixed at a weight ratio of 100:40:80:4.8:8.64, whereby a catalyst slurry was obtained.

(Preparation of Catalyst)

To a glass fiber paper (SPP-110, manufactured by Oribest Co., Ltd.), the catalyst slurry was uniformly applied so that the supported amount was 300 g/m$^2$. The glass fiber paper having the catalyst slurry supported thereon was dried and calcined, whereby a catalyst was obtained.

(Comparative Example 4)

A catalyst was obtained in the same manner as in Comparative Example 1 except that the weight ratio of AMV in Comparative Example 1 was changed to 2.4.

(Example 6)

(Preparation of Catalyst Slurry: Preparation of Ti Slurry)

A silica sol, ion exchanged water, a TiO$_2$ powder, and a 50% AMT aqueous solution were mixed at a weight ratio of 100:40:80:8.64, whereby a Ti slurry was obtained.

(Preparation of Catalyst Slurry: Preparation of V-Containing Slurry)

A silica sol, ion exchanged water, a TiO$_2$ powder, AMV, and a 50% AMT aqueous solution were mixed at a weight ratio of 150:100:80:5:9, whereby a V-containing slurry was obtained.

(Preparation of Catalyst)

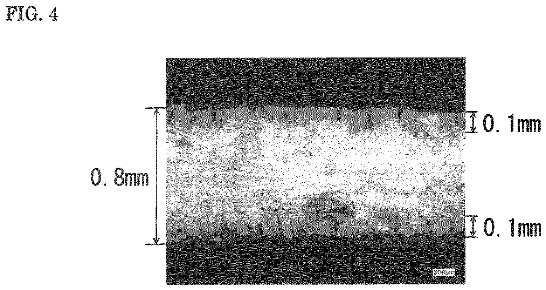

To a glass fiber paper, the Ti slurry was uniformly applied so that the supported amount was 200 g/m$^2$, and dried. Thereafter, the V-containing slurry was applied to the glass fiber paper having the Ti slurry supported thereon. Then, the glass fiber paper having the V-containing slurry supported thereon was dried and calcined, whereby a catalyst was obtained. Here, FIG. 4 shows a photograph of a cross section of the catalyst taken using an optical microscope. While the thickness of the catalyst was 0.8 mm, the thickness of the surface layer having V supported therein was 0.1 mm.

(SO$_2$ Oxidation Ability Test)

A catalytic performance test was performed under the conditions shown in Table 5 for the catalysts (Comparative Examples 5 and 6 and Example 4) obtained above.

Table 5. SO$_2$ Oxidation Ability Test Conditions

| | |
|---|---|
| Gas composition: O$_2$ | 2.72% |
| Gas composition: SO$_2$ | 2885 ppmvd |
| Gas composition: N$_2$ | Balance |
| H$_2$O | 12.2% |
| Gas flow rate | 3.99 Nm$^3$/h |
| Areal velocity | 20.3 Nm/h |
| Reaction temperature | 393°C |

The results obtained by performing the test under the conditions shown in Table 5 are shown in the following Table 6.

Table 6. SO$_2$ Oxidation Ability Test Results

| | V supporting state | V supported amount | V (surface) [wt%] | V (whole) [wt%] | V (whole) / V (surface) | SO$_2$ oxidation rate [%] |
|---|---|---|---|---|---|---|
| Comparative Example 3 | whole | 1.0 | 3.70 | 3.78 | 1.0 | 0.34 |
| Comparative Example 4 | whole | 0.5 | - | - | - | 0.17 |
| Example 6 | surface* | 0.5 | 3.02 | 1.26 | 0.4 | 0.03 |
| *: While the thickness of the catalyst was 0.8 mm, the thickness of each of the upper and lower V layers was about 0.1 mm. | | | | | | |

From Comparative Examples 3 and 4, it was found that the SO$_2$ oxidation rate has a correlation with the V supported amount. However, when comparing Comparative Example 4 with Example 6, although the V supported amounts are equal, the SO$_2$ oxidation rate is lower in Example 6. From this result, it was found that by supporting V only in the surface, the SO$_2$ oxidation rate can be suppressed. It was revealed that the amount of vanadium unevenly supported in the surface of the catalyst is preferably 50% or less of the amount supported in the whole catalyst.

(Verification of Effect of Denitration Catalytic Performance)

In the following reference experiment, by using the amount of tungsten (W) in Reference Example 1 as a reference, verification of the effect of the denitration catalytic performance was performed using catalysts in which only the amount of tungsten (W) in the surface (V layer) was increased as Reference Example 2 to Reference Example 5 and using catalysts in which the amount of tungsten (W) in the internal layer (Ti layer) and the surface (V layer) was increased as Reference Example 6 to Reference Example 10.

(Reference Example 1)

A 20% zirconium acetate aqueous solution (ZA-20, manufactured by Daiichi Kigenso Kagaku Kogyo Co., Ltd.), ion exchanged water, TiO$_2$, and a 50% AMT aqueous solution were mixed at a weight ratio of 100:40:80:8.64, whereby a Ti slurry was obtained. Subsequently, a 20% zirconium acetate aqueous solution, ion exchanged water, TiO$_2$, AMV, and a 50% AMT aqueous solution were mixed at a weight ratio of 220:70:80:6:9, whereby a V-containing slurry was obtained. To a glass fiber paper, the Ti slurry was uniformly applied and dried. Thereafter, the V-containing slurry was uniformly applied to both faces of the glass fiber paper having the Ti slurry supported thereon. Then, the glass fiber paper having the V-containing slurry supported thereon was dried and calcined, whereby a catalyst was obtained.

(Reference Example 2)

A 30% zirconium acetate aqueous solution (manufactured by Minchem Ltd.), ion exchanged water, $TiO_2$, and a 50% AMT aqueous solution were mixed at a weight ratio of 100:90:80:9.5, whereby a Ti slurry was obtained. Subsequently, a 30% zirconium acetate aqueous solution, ion exchanged water, $TiO_2$, AMV, and a 50% AMT aqueous solution were mixed at a weight ratio of 100:90:80:6:12.2, whereby a V-containing slurry was obtained. To a glass fiber paper, the Ti slurry was uniformly applied and dried. Thereafter, the V-containing slurry was uniformly applied to both faces of the glass fiber paper having the Ti slurry supported thereon. Then, the glass fiber paper having the V-containing slurry supported thereon was dried and calcined, whereby a catalyst was obtained.

(Reference Example 3)

A catalyst was obtained in the same manner as in Reference Example 2 except that the weight ratio of the V-containing slurry in Reference Example 2 was changed to 100:90:80:6:16.7.

(Reference Example 4)

A catalyst was obtained in the same manner as in Reference Example 2 except that the weight ratio of the V-containing slurry in Reference Example 2 was changed to 100:90:80:6:25.9.

(Reference Example 5)

A catalyst was obtained in the same manner as in Reference Example 2 except that the weight ratio of the Ti slurry and the weight ratio of the V-containing slurry in Reference Example 2 were changed to 100:90:80:14.6 and 100:90:80:6:12.2, respectively.

(Reference Example 6)

A catalyst was obtained in the same manner as in Reference Example 2 except that the weight ratio of the Ti slurry and the weight ratio of the V-containing slurry in Reference Example 2 were changed to 100:90:80:19.9 and 100:90:80:6:16.7, respectively.

(Reference Example 7)

A catalyst was obtained in the same manner as in Reference Example 2 except that the weight ratio of the V-containing slurry in Reference Example 2 was changed to 100:90:80:6:36.

(Reference Example 8)

A catalyst was obtained in the same manner as in Reference Example 2 except that the weight ratio of the Ti slurry and the weight ratio of the V-containing slurry in Reference Example 2 were changed to 100:90:80:25.4 and 100:90:80:6:21.2, respectively.

(Reference Example 9)

A catalyst was obtained in the same manner as in Reference Example 2 except that the weight ratio of the Ti slurry and the weight ratio of the V-containing slurry in Reference Example 2 were changed to 100:90:80:31.3 and 100:90:80:6:25.9, respectively.

(Reference Example 10)

A catalyst was obtained in the same manner as in Reference Example 2 except that the weight ratio of the Ti slurry and the weight ratio of the V-containing slurry in Reference Example 2 were changed to 100:90:80:43.6 and 100:90:80:6:36, respectively.

(Denitration Catalytic Performance Test)

A denitration catalytic performance test was performed for the catalysts (Reference Examples 1 to 9) obtained above. In the test, two pieces obtained by cutting out each of the above-mentioned catalysts to a test piece size of $30 \times 50$ mm were used. The cut out catalyst was clipped in a mesh catalyst holder and placed in a reaction tube made of alumina.

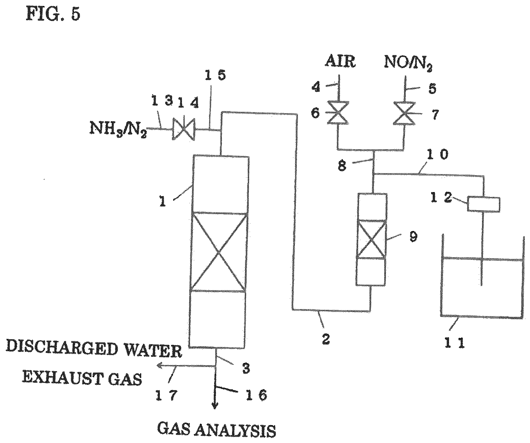

FIG. 5 shows a flow sheet of a testing device to be used in the catalytic performance test.
A model gas for a denitration test is introduced through a line (2) from one side of a reaction tube (1) in which any of the above-mentioned catalysts is loaded, and the gas having been subjected to a treatment with the catalyst is discharged from the other side through a line (3).
The model gas for the test to be introduced into the reaction tube (1) through the line (2) is prepared by mixing air from a line (4) and $NO/N_2$ gas from a line (5). A valve (6) and a valve (7) are provided in the line (4) and the line (5), respectively, and by adjusting the valve (6) and the valve (7), the flow rate of each gas is adjusted so as to adjust the gas flow rate and the mixing ratio. The gas after mixing is introduced into an upper portion of an evaporator (9) through a line (8) and is supplied to the reaction tube (1) from a lower portion through the line (2). Upstream of this evaporator (9), water is supplied through a line (10). Water is pumped up with a metering feed pump (12) from a water tank (11) and then introduced upstream of the evaporator (9) through the line (10). $NH_3$ is introduced upstream of the reaction tube (1) through a line (15) by adjusting the gas flow rate of $NH_3/N_2$ gas by a valve (14) provided in a line (13). In the line (2), water evaporated by the evaporator (9) is heated by a heater (not shown). The gas having been subjected to the treatment discharged from the reaction tube (1) is discharged outside from the line (3) through a line (17) and also a portion is subjected to a gas analysis through a line (16).
At the time of performing the test using the catalytic performance testing device shown in FIG. 5, the test conditions are summarized in the following Table 7.

Table 7

| | |
|---|---|
| Gas composition: NOx | 300 ppmvd |
| Gas composition: $NH_3$ | 300 ppmvd |
| Gas composition: $O_2$ | 3 vol%-dry |
| Gas composition: $N_2$ | Balance |
| Water | 8 vol% |
| Gas flow rate | 5 L/min |
| Catalyst amount | Two test pieces |
| Areal velocity | 50 Nm/h |
| Reaction temperature | 350°C |

The "Balance" in Table 7 represents a material that is added so as to make the gas composition 100% in total and indicates that the gas composition other than NOx, $NH_3$, $O_2$, and water is occupied by $N_2$. Further, the "Areal velocity" was calculated according to the following numerical formula (5) .

```
Numerical formula (5):

        Areal velocity [Nm/h]

        = Gas flow rate [Nm³/h] / Catalyst geometric area [m²]
```

In the gas analysis, the inlet and outlet NOx concentrations were measured using a NOx meter. From the measured values by the NOx meter, the denitration rate representing the NOx removal performance of the catalyst was calculated according to the following numerical formula (6).

```
Numerical formula (6):

        Denitration rate [%]

            = (NOx(in) - NOx(out)) / NOx(in) × 100
```

(Catalytic Performance Test and Component Analysis Results)

In Table 8, the denitration catalytic performance test results and component analysis results are shown. In the catalysis component analysis, measurement was performed using an X-ray fluorescence spectrometer. The "Plate form" and "Powder form" in Table 8 denote the shape of the catalyst when performing the component analysis. That is, in the case of "Plate form", the measurement was performed in a state of the test piece of the obtained catalyst as it is, and in the case of "Powder form", the measurement was performed in a state where the test piece was pulverized.

Further, the "$W/TiO_2$" in Table 8 represents the weight ratio of tungsten (W) with respect to titania ($TiO_2$) in the catalyst (also in the following description, it represents the weight ratio in the same manner) and was calculated according to the following numerical formula (7) from the weight percentages of tungsten oxide ($WO_3$) and titania ($TiO_2$) measured in the component analysis.

```
Numerical formula (7):

W/TiO₂ [-] = WO₃ [wt%] × (Atomic weight of W / Molecular

weight of WO₃ / TiO₂ [wt%] = WO₃ [wt%] × (183.84/231.84) /

TiO₂ [wt%]
```

Table 8

|  | Denitration rate [%] | $W/TiO_2$ (-) | |
|---|---|---|---|
|  |  | Plate form | Powder form |
| Reference Example 1 | 58.2 | 0.046 | 0.051 |
| Reference Example 2 | 55.0 | 0.048 | 0.057 |
| Reference Example 3 | 56.8 | 0.064 | 0.066 |
| Reference Example 4 | 60.5 | 0.099 | 0.084 |
| Reference Example 5 | 67.0 | 0.112 | 0.094 |
| Reference Example 6 | 57.3 | 0.068 | 0.076 |
| Reference Example 7 | 63.0 | 0.093 | 0.104 |
| Reference Example 8 | 67.7 | 0.133 | 0.138 |
| Reference Example 9 | 69.3 | 0.167 | 0.160 |
| Reference Example 10 | 66.0 | 0.185 | 0.219 |

With respect to the denitration performance when the amount of tungsten (W) is increased only in the surface (V layer) (Reference Examples 2 to 5), it is preferred that $W/TiO_2$ in the catalyst surface is 0.11 or more and $W/TiO_2$ in the whole catalyst is 0.09 or more. On the other hand, with respect to the denitration performance when the amount of tungsten (W) is increased in the inside (Ti layer) and the surface (V layer) (Reference Examples 6 to 10), it is preferred that $W/TiO_2$ in the catalyst surface is 0.13 or more and $W/TiO_2$ in the whole catalyst is 0.13 or more.

**Claims**

**1.** A catalyst support structure, **characterized in that** vanadium is unevenly supported in a surface of a support structure.

2. The catalyst support structure according to claim 1, wherein
the support structure includes an inactive support in a structure, and
the inactive support is included throughout the entire region from the inside to the surface of the support structure, and vanadium is supported on the inactive support present in the surface of the support structure.

3. The catalyst support structure according to claim 1 or 2, wherein a supported vanadium amount is 2.0 wt% or more with respect to the total weight of the surface of the catalyst support structure.

4. The catalyst support structure according to any one of claims 1 to 3, wherein the structure is constituted by a base material selected from a glass paper and a ceramic fiber sheet.

5. The catalyst support structure according to any one of claims 1 to 3, wherein the structure has a honeycomb structure formed by alternately stacking the flat plate-shaped base materials selected from a glass paper and a ceramic fiber sheet and the corrugated plate-shaped based materials formed by molding the flat plate-shaped base material into a corrugated plate shape.

6. The catalyst support structure according to any one of claims 2 to 4, wherein the inactive support is at least one selected from titania, alumina, zirconia, and silica.

7. A method for manufacturing a catalyst support structure in which vanadium is unevenly supported in a surface of a support structure including an inactive support, comprising:

a step of incorporating the inactive support throughout from the inside to the surface of the structure using an inactive support-containing liquid; and
a step of immersing the structure having been subjected to the step in a liquid containing vanadium or applying the same liquid to the surface of the same structure, followed by drying and calcinating, thereby supporting vanadium on the inactive support present in the surface of the structure.

8. The method for manufacturing a catalyst support structure according to claim 7, wherein the structure is composed of a base material selected from a glass paper and a ceramic fiber sheet, and the vanadium supporting step is a step of supporting vanadium in both front face and rear face of the base material.

9. The method for manufacturing a catalyst support structure according to claim 8, wherein the structure includes a glass paper as the base material, and in the step of incorporating the inactive support in the structure, the inactive support-containing liquid further contains an inorganic binder selected from titania, alumina, zirconia, and silica.

10. The method for manufacturing a catalyst support structure according to claim 8 or 9, wherein after the vanadium supporting step, the method includes a step of molding a flat plate-shaped base material into a corrugated plate shape, and a step of alternately stacking the flat plate-shaped base materials and the corrugated plate-shaped based materials, thereby forming a honeycomb structure.

11. A catalyst support structure with a multilayer structure, **characterized in that** in the catalyst support structure according to claim 1,
tungsten (W) is further contained, and
in a multilayer structure catalyst in which a V-containing layer is formed on a surface of a support formed with a material that is inactive in catalytic performance, the amounts of W in the V-containing layer in a catalyst surface and in an inactive layer inside the catalyst are different, and $W/TiO_2$ in the catalyst surface is 0.11 or more and $W/TiO_2$ in the whole catalyst is 0.09 or more.

12. A catalyst support structure with a multilayer structure, **characterized in that** in the catalyst support structure according to claim 1,
tungsten (W) is further contained, and
in a multilayer structure catalyst in which a V-containing layer is formed on a surface of a support formed with a material that is inactive in catalytic performance, the amounts of W in the V-containing layer in a catalyst surface and in an inactive layer inside the catalyst are equal, and $W/TiO_2$ in the catalyst surface and in the whole catalyst is 0.13 or more.

FIG. 1

GAS FLOW

NOx, NH$_3$    N$_2$, H$_2$O

CROSS SECTION OF CATALYST

SO$_2$    SO$_3$    Hg$^0$    Hg$^{2+}$

● : ACTIVE SPOT

FIG. 2

FLAT PLATE

CORRUGATED PLATE

FLAT PLATE

● : ACTIVE SPOT

FIG. 3

FIG. 4

FIG. 5

DISCHARGED WATER

EXHAUST GAS

GAS ANALYSIS

## INTERNATIONAL SEARCH REPORT

| International application No. |
|---|
| PCT/JP2017/036336 |

| A. CLASSIFICATION OF SUBJECT MATTER |
|---|
| B01J23/22(2006.01)i, B01D53/86(2006,01)i, B01J23/30(2006.01)i, B01J35/04(2006.01)i, B01J35/06(2006.01)i, B01J37/02(2006.01)i |

According to International Patent Classification (IPC) or to both national classification and IPC

| B. FIELDS SEARCHED |
|---|
| Minimum documentation searched (classification system followed by classification symbols) |
| B01J21/00-38/74, B01D53/86-53/90, B01D53/94-53/96 |

Documentation searched other than minimum documentation to the extent that such documents are included in the fields searched
Published examined utility model applications of Japan 1922-1996
Published unexamined utility model applications of Japan 1971-2017
Registered utility model specifications of Japan 1996-2017
Published registered utility model applications of Japan 1994-2017

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2010-17687 A (BABCOCK-HITACHI K.K.) 28 January 2010, claims 1, 2, paragraphs [0001], [0005], [0013], | 1-3, 6, 7, 11, 12 |
| Y | [0019]-[0032] (Family: none) | 4, 5, 8-10 |
| X | WO 2008/035773 A1 (BABCOCK-HITACHI K.K.) 27 March 2008, | 1-4, 6-9 |
| Y | claims, paragraphs [0008]-[0014], [0020]-[0021], embodiment 1 & US 2009/0311155 A1, claims, [0011]-[0017], [0023]-[0024], example 1 & EP 2075060 A1 & CA 2662593 A & KR 10-2009-0075787 A & CN 101528343 A | 4, 5, 8-10 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| | |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2017/036336

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2008-73621 A (HITACHI ZOSEN CORP.) 03 April 2008, paragraphs [0001], [0007]-[0012], embodiment 1 & US 2010/0041547 A1, paragraphs [0001], [0008]-[0017], example 1 & WO 2008/035663 A1 & CN 101516509 A | 1-8, 10<br>4, 5, 8-10 |
| X | JP 56-168835 A (MITSUBISHI PETROCHEMICAL CO., LTD.) 25 December 1981, claim 1, page 3, lower left column, line 12 to lower right column, line 7, page 4, lower right column, line 13 to page 5, upper right column line 8, embodiment 1 & table 1 & US 4466947 A, claim 1, column 3, lines 6-16, column 4, line 35 to column 5, line 8, example 1, table 1 | 1-3, 6, 12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005125211 A